# EUROPEAN PATENT SPECIFICATION

(11) **EP 3 048 089 B1**
(45) Date of publication and mention of the grant of the patent: **18.09.2019**
(21) Application number: 16151127.4
(22) Date of filing: 13.01.2016
(51) Int. Cl.: C04B 35/19, C04B 35/195, C04B 38/00

(54) **EXTRUDABLE CERAMIC COMPOSITION AND METHOD OF MAKING**
EXTRUDIERBARE KERAMISCHE ZUSAMMENSETZUNG UND VERFAHREN ZUR HERSTELLUNG
COMPOSITION CÉRAMIQUE EXTRUDABLE ET PROCÉDÉ DE FABRICATION

(30) Priority: 21.01.2015 US 201514602121
(43) Date of publication of application: 27.07.2016
(73) Proprietor: The Boeing Company, Chicago, IL 60606-1596 (US)
(72) Inventor: CROOKS, Tab Hunter, Chicago, IL 60606-2016 (US); HENG, Sangvavann, Chicago, IL 60606-2016 (US)
(74) Representative: Boult Wade Tennant LLP

(56) References cited:
- EP-A1- 1 738 814
- US-A1- 2006 177 629
- US-A1- 2011 151 181

## Description

### Field of the Disclosure

The present disclosure is directed to an extrudable composite and a method of making a ceramic composite.

### Background

Conventional monolithic extruded ceramic materials are brittle and can have low strength (e.g., are easily crushed). Further, due to their insulating properties they do not propagate heat well, which can result in long cooling times in thermal applications.

In some applications, such as the sequestration of carbon dioxide from gas streams and catalytic converters, monolithic extruded ceramic materials with complex structures and/or high surface area are desired. For such applications, the ability to decrease minimum dimensions, such as wall thicknesses, of ceramic structures would be beneficial. However, the low strength and poor thermal properties of conventional monolithic extruded ceramic materials can be a limiting factor for achieving the desired minimum dimensions.

Fillers are generally known for altering the physical characteristics of materials. In particular, it is known that fibers may be added to ceramics to increase strength and provide other desired properties. For example, carbide fibers are known for providing thermal conductivity and silica fibers are known for providing insulation or strength. However, fibers are not generally known for use in extruded materials because such particles may undesirably interfere with the extruder equipment.

Thus, there is a need in the art for extrudable materials that can be used to make ceramic structures with increased strength and/or increased thermal conductivity.

EP 1 738 814 A1 discloses an extrudable composition comprising γ-alumina particles and silica-alumina fibers with an aspect ratio of 10. EP 1 738 814 A1 mentions that also alumina, silica, zirconia, titania, ceria, mullite and zeolite particles may be used independently or in combination.

### SUMMARY

The present invention is directed to an extrudable composite as disclosed in claim 1. The extrudable composite comprises a pre-sintered ceramic matrix material; a plurality of particles having an aspect ratio ranging from about 2 to about 100, the plurality of particles comprising at least one particle type chosen from structurally reinforcing particles and thermal conductivity modifying particles; and a carrier liquid.

The present invention is also directed to an extruded ceramic composite as disclosed in claim 3. The composite comprises a matrix comprising a refractory ceramic and a plurality of particles embedded in the matrix. The plurality of particles have an aspect ratio ranging from about 2 to about 100, the plurality of particles comprising at least one particle type chosen from structurally reinforcing particles and thermal conductivity modifying particles. The extruded ceramic composite has an extruded shape.

The present invention is also directed to a method of making a ceramic composite as disclosed in claim 10. The method comprises mixing one or more pre-sintered ceramic matrix materials, a plurality of particles and a carrier liquid to form an extrudable composite material. The plurality of particles have an aspect ratio ranging from about 2 to about 100 and comprise at least one particle type chosen from structurally reinforcing particles and thermal conductivity modifying particles. The composite material is extruded into an extruded shape. The extruded composite material is heated to form a ceramic composite.

It is to be understood that both the foregoing general description and the following detailed description are exemplary and explanatory only and are not restrictive of the present teachings, as claimed.

### BRIEF DESCRIPTION OF THE DRAWINGS

The accompanying drawings, which are incorporated in and constitute a part of this specification, illustrates aspects of the present teachings and together with the description, serve to explain the principles of the present teachings.
FIGS. 1A and 1C illustrate example monolithic honeycomb ceramic structures, according to the present disclosure.
FIG. 1B illustrates a cross-section perpendicular to the dimension *L* of the honeycomb structure of FIG. 1A.
FIG. 2 is an example process flow chart of a method for making the ceramic composites, according to an aspect of the present disclosure.
FIG. 3 shows a schematic view of an example gas capture system employing the example monolithic honeycomb ceramic structure of FIG. 1, according to an aspect of the present disclosure.
FIG. 4 shows thermal transfer data collected for a ceramic composition comprising a 13X zeolite, according to an example of the present disclosure.
FIG. 5 shows thermal transfer data collected for a ceramic composition comprising silicon carbide, according to the present disclosure.

It should be noted that some details of the figures have been simplified and are drawn to facilitate understanding rather than to maintain strict structural accuracy, detail, and scale.

### DESCRIPTION

Reference will now be made in detail to the present teachings, examples of which are illustrated in the accompanying drawings. In the drawings, like reference numerals have been used throughout to designate identical elements. In the following description, reference is made to the accompanying drawings that form a part thereof, and in which is shown by way of illustration specific examples of practicing the present teachings. The following description is, therefore, merely exemplary.

The present disclosure is directed to an extrudable ceramic composite as disclosed in claim 1. The composite comprises a matrix comprising a refractory ceramic. A plurality of particles are embedded in the ceramic matrix. The plurality of particles have an aspect ratio ranging from about 2 to about 100. The particles comprise at least one particle type chosen from structurally reinforcing particles and thermal conductivity modifying particles.

The ceramic matrix can comprise any suitable refractory ceramic material, including natural or synthetic ceramics. All or a portion of the ceramic matrix can be chemically active, meaning that the matrix can participate chemically in a chemical reaction, such as by acting as a catalyst, or that it can function to carry out some other desired process at the molecular level, such as by acting to separate gas molecules in a gas extraction process (e.g., as in the case of a molecular sieve). Many chemically active ceramic materials are known that can provide a suitable matrix material. For example, the refractory ceramic matrix can comprise zeolites, such as aluminosilicates, or other chemically active materials such as silica-alumina or alkali-modified amorphous silica alumina. Specific examples of zeolites include X zeolites, such as 13X zeolites, and A zeolites, such as 3A zeolites, Zeolite Socony Mobil (ZSM), chabazite, clinoptiolite and other naturally occurring or synthetic zeolites, any of which can be treated by a chemical exchange process (e.g., ion exchange) and/or can otherwise be modified, as is well known in the art.

A matrix that has chemical activity throughout its bulk can be made by combining one or more chemically active matrix materials, such as any of those discussed herein, with a relatively inert ceramic matrix material. The matrix material can include a combination of chemically active ceramics and inert ceramics in any desired proportions that will provide the desired level of chemical conductivity. Examples of inert matrix materials can include inorganic oxides, such as metal oxides, semiconductor oxides, and silicates, where the inorganic oxides are not zeolites. Specific examples of inorganic oxides include titanates, aluminum oxides, silicon oxides, zirconia oxides, alumino silicates or any combination thereof. One specific example of a chemically inert material is cordierite. In some instances, the matrix material does not include cordierite.

The zeolites are about 20% to about 80% by weight, based on the pre-sintered weight of the ceramic matrix material (e.g., excluding any non-ceramic matrix material ingredients such as organic binders or extrusion agents). For example, the matrix can be 30% by weight of the matrix material or more, such as 40%, or more of the matrix material by weight. In an example, substantially all of the matrix material can be a refractive ceramic zeolite. Because the bulk of the ceramic matrix is chemically active, the resulting matrix can carry out a desired chemical function, such as catalysis or gas extraction, without the need for providing an additional chemically active material to the matrix.

The ceramic matrix material can be any suitable amount of the composite. For example, the ceramic matrix material can be included in the composition in an amount that will result in about 45% by weight or more matrix material based on the total weight of the composite after sintering, such as about 55% to about 99.5%, or about 55% to about 95% by weight based on the total weight of the composite after sintering. The amount of ceramic matrix powder used in the pre-sintered clay compositions may vary. Examples can range from about 30% or more ceramic matrix material, such as about 35% to about 75%, based on the total dry weight of the composite ingredients prior to sintering.

Many extrudable products do not benefit from chemical activity. In such cases all or a portion of the ceramic matrix material can be inert. Alternatively, an active material can be added to the inert matrix after the matrix has been formed, such as by coating or plating the ceramic matrix after sintering, in order to allow the resulting structure to carry out a desired function, such as catalysis or gas extraction.

Additional optional materials, such as binders and extrusion aids, can be added to the mixture used to form the ceramic matrix. Examples of suitable inorganic binders include calcium silicate, sodium aluminates, sodium silicates, alkaline or alkaline earth metals, phosphates, alumina, clays, bentonites or borates, as well as organic binders, such as polyvinyl alcohol ("PVA"). Examples of suitable extrusion aids include at least one compound selected from methyl cellulose or hydroxyalkyl substituted methyl cellulose, such as hydroxypropyl methylcellulose. An example of a commercially available methyl cellulose based extrusion aid is METHOCEL™, available from Dow of Midland, Michigan. Binders and extrusion aids are generally well known in the art and one of ordinary skill in the art would be able to determine suitable amounts of these materials for use in the compositions of the present disclosure. The sintering process that is used to fire the ceramics may completely or partially burn out any binders or extrusion aids that cannot withstand high temperatures. For example, many organic binders will be burned out at sintering temperatures of 300° C or more, such as 400° C or more. While residual binder can potentially remain, this can also create pores in the matrix material. The added pores can decrease the strength of the matrix, but may in some cases be desired to achieve higher porosity.

The structurally reinforcing particles employed in the composites of the present disclosure can be any suitable particles having a shape or design that is capable of providing structural reinforcement to the final ceramic structure and that can withstand the high temperatures employed during sintering. For example, the structurally reinforcing particles can comprise ceramic or other inorganic refractory materials in either fiber or non-fiber particle form. Such materials can include inorganic oxides or nonoxide inorganics, such as inorganic carbides, inorganic borides, inorganic nitrides and inorganic silicides. Where the particle is an inorganic oxide it can be made from a different inorganic oxide than is used to form the matrix. Specific materials useful as particles include semiconductor oxides, metal oxides, silica, alumina silicate, zirconia, alumina, boria, silicon carbide, semiconductor nitrides such as silicon nitrides, metal nitrides, semiconductor carbides such as silicon carbide, metal carbides, semiconductor borides such as silicon boride, metal borides, metal silicides or elemental carbon, such as in carbon fibers, carbon nanotubes or carbon powder, and mixtures thereof. An example of a commercially available material is NEXTEL™ 312, which is an alumina-boria-silica fiber available from 3M of St. Paul, Minnesota. Metal particles can also be employed to enhance strength. Examples include any of the refractory metal or refractory metal alloy particles described below for use in thermal conductivity modifying particles.

The thermal conductivity modifying particles can be any suitable particle that is capable of either increasing or decreasing thermal conductivity to within a desired range and that can withstand the high temperatures employed during sintering. For example, the thermal conductivity modifying particles can comprise at least one material chosen from inorganic nitrides such as metal nitrides and semiconductor nitrides, inorganic borides such as metal borides and semiconductor borides, silicon, silicon carbide, elemental carbon, such as carbon fibers, and metal particles. Examples of metal particles include particles made of refractory metals or alloys thereof, such as niobium, niobium alloys, molybdenum, molybdenum alloys, tantalum, tantalum alloys, tungsten, tungsten alloys, rhenium, rhenium alloys, titanium, titanium alloys, vanadium, vanadium alloys, chromium, chromium alloys, zirconium, zirconium alloys, hafnium, hafnium alloys, ruthenium, ruthenium alloys, osmium, osmium alloys, iridium and iridium alloys, and mixtures thereof. The materials can be in fiber or non-fiber form.

In some applications, such as CO₂ capture, it can be desirable to have bi-directional thermal conductivity, meaning that the extruded ceramic has sufficiently good thermal conductivity so that it can be both quickly heated and quickly cooled, depending on process needs at any given time. Including at least one of silicon carbide particles, carbon particles or metal particles in the ceramic in sufficient amounts can provide desired improvements in bi-directional thermal conductivity. For instance, 5% by weight or more of either silicon carbide or carbon particles, based on the total weight of the ceramic composite, can provide desired increases in bi-directional thermal conductivity.

Using high weight percentages of particles can be problematic during the extrusion process, especially in cases where complex shapes are formed. The amount of particles included in the composite can depend on the final shape that is to be formed from the extrudable material. For relatively simple shapes or shapes that have thicker minimum dimensions, such as pipes or solid objects, the particles can be included in an amount up to about 40% by weight, such as an amount ranging from about 0.5% to about 40% by weight relative to the total weight of the sintered ceramic composition. For more complex shapes or shapes that have thinner minimum dimensions, such as thin-walled structures, the particles can be included in an amount up to about 20% by weight, such as an amount ranging from about 0.5% to about 20% by weight relative to the total weight of the sintered ceramic composition. The amount of particles added to the to pre-sintered clay compositions may vary. Example particle concentrations can range from about 0.2% by weight or more particles, such as about 1% to about 30%, or about 5% to about 20% by weight, based on the total dry weight of the composite ingredients prior to sintering.

The particles can have any suitable form that is compatible with extrusion. For example, the particles can be in the form of a powder, a uniform fiber, a chopped fiber, a milled fiber or combinations thereof. The term particle as used in the present disclosure is defined to include particles of any shape, including flakes, tubes, fibers, spherical particles, and any other symmetrically shaped or non-symmetrically shaped particle. To improve the ability of the composite materials to be extruded, the particles have aspect ratios ranging from about 1 to about 100, such as about 2 to about 50, or about 4 to about 10. The desired aspect ratios can be achieved in any suitable manner, such as by grinding, milling or chopping the fibers to have the desired size. The term aspect ratio is defined herein to be the ratio of the average length of the fibers to the average smallest fiber dimension (e.g., thickness, or in the case of cylindrical fibers, the diameter).

The particles can have at least one dimension of 100 microns or less, such as 0.001 microns to about 100 microns, or about 1 micron to about 50 microns, or about 1 micron to about 20 microns. For spherical, cylindrical or tubular shaped particles, the at least one dimension can be a diameter.

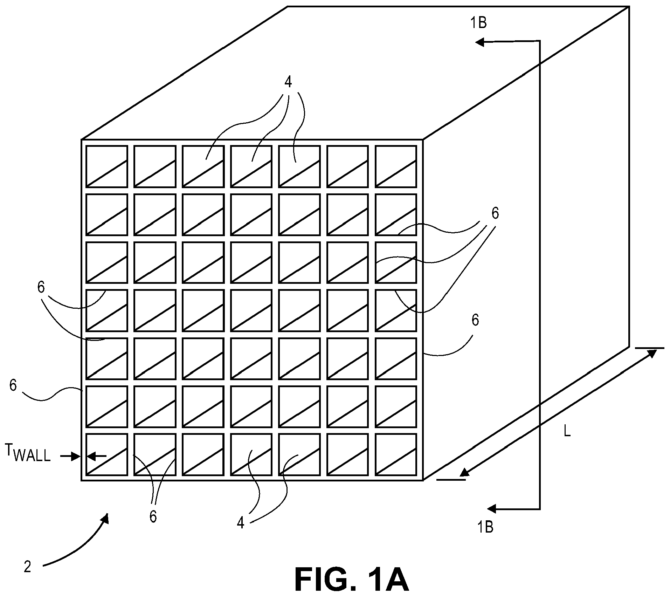

The composites of the present disclosure can be extruded into any suitable shape capable of being formed by extrusion techniques. One example of an extruded shape is a monolithic honeycomb structure 2 comprising a plurality of cells 4 having cell walls 6, as shown in FIG. 1A. Cells 4 are illustrated as having a square cross-section, but can have other shapes as well. Some examples of other shapes include hexagonal, rectangular, circular, oval or triangular shaped cross-sections.

The increased strength provided by the composites of the present disclosure allows for thinner cell walls and therefore an increased cell density, while still providing acceptable crush strength for the honeycomb structure. The honeycomb shape can have one or a plurality of cell walls having a thickness of 0.254 mm (10 mils) or less, such as about 0.0254 mm (1 mil) to about 0.203 mm (8 mils), or about 0.0508 mm (2 mils) to about 0.127 mm (5 mils). In an example, all of the walls of the honeycomb structure have a thickness of less than 0.254 mm (10 mils), or less than 0.127 mm (5 mils), or less than 0.0508 mm (2 mils). The monolithic honeycomb structure can have a cell density that is greater than 50 cells per square inch or more, such as 60, 100 or 400 cells per square inch or more.

The ceramic composite materials of the present disclosure can provide one or more of the following advantages: increased strength or increased or decreased thermal conductivity, such as, for example, a free supporting, chemically active or inert, monolithic honeycomb structure having at least one of an increased strength under load or an increased thermal conductivity compared to the same monolithic honeycomb structure without the plurality of particles; a composite with improved bi-directional thermal conductivity; an increased surface area and/or decreased minimum dimension capable of supporting a desired weight load, such as a monolithic honeycomb structure having an increased surface area, increased cell density and/or decreased wall thickness that is capable of supporting a greater weight than the same monolithic honeycomb structure without the plurality of particles; the ability to form objects with complex ceramic shapes having increased strength by extrusion techniques; and/or reduced back pressure for ceramic matrix structures used in gas separation or extraction processes. Where structural reinforcing particles are employed, a crush strength can be improved by up to 20% or more compared to the same monolithic honeycomb structure without the plurality of particles. Where thermal conductivity modifying particles are employed, the thermal conductivity can be increased by 10% or more, such as by 40%, compared to the same monolithic honeycomb structure without the plurality of particles. The improvement that is realized can depend on the loading amounts of the particles and the ceramic matrix and particle materials used, among other things.

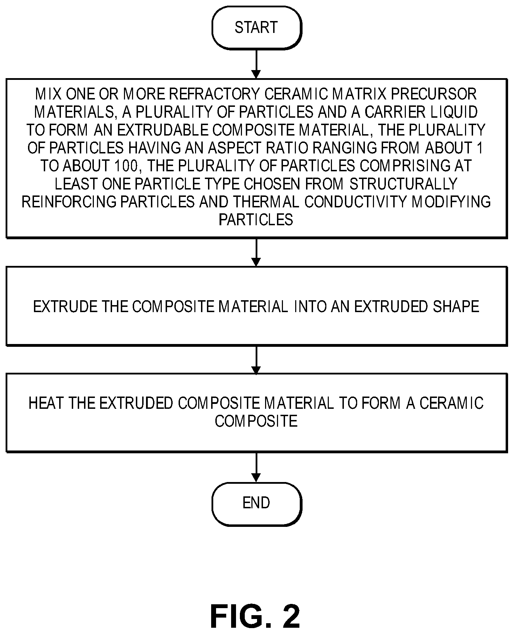

The ceramic composites of the present disclosure can be made by any suitable extrusion method. As shown in the flow chart of FIG. 2, a suitable method can comprise mixing one or more pre-sintered ceramic matrix materials, a plurality of particles and a carrier liquid to form an extrudable composite material. As described above, the plurality of particles have an aspect ratio ranging from about 1 to about 100. The plurality of particles comprise at least one particle type chosen from structurally reinforcing particles and thermal conductivity modifying particles. After mixing, the composite material can be extruded into a desired shape, including any of the shapes discussed herein. The extruded composite is then heated to form the ceramic composite, as discussed in more detail below.

The one or more pre-sintered ceramic matrix materials can include any materials suitable for forming the sintered ceramic matrix materials of the present disclosure. For example, the pre-sintered ceramic matrix material ingredients can include powdered forms of any of the ceramic matrix materials described herein. The powdered forms can have particles of any size suitable for forming a ceramic matrix, such as, for example, average particle sizes of 50 microns or less, such as 25 microns or 5 microns or less. Specific examples of powdered active materials for forming a chemically active matrix include powdered zeolite, including any of the zeolites described herein in powdered form, such as powdered aluminosilicates, powdered silica-alumina, powdered alkali-modified amorphous silica alumina, powdered X zeolites, such as 13X zeolites, and powdered A zeolites, such as 3A zeolites, powdered Zeolite Socony Mobil (ZSM), powdered chabazite, powdered clinoptiolite and other powdered naturally occurring or synthetic zeolites. Examples of the inert ingredients that can be used to form the ceramic matrix include powdered inorganic oxides, such as powdered metal oxides, powdered semiconductor oxides, and powdered silicate, where the inorganic oxides are not zeolites. Specific examples of powdered inorganic oxides include titanates, aluminum oxides such as beohmite, silicon oxides, zirconia oxides, alumino silicates, cordierite or any combination thereof. Suitable commercially available premixes for forming both chemically reactive matrix material and inert matrix material can be readily obtained. One of ordinary skill in the art would be able to choose appropriate ceramic matrix materials based on the specific application and desired characteristics of the extrudable material, such as the operating temperature at which the extruded product will be used, coefficient of thermal expansion matching, thermal properties desired, etc.

The carrier liquid can be water or any other suitable liquid, such as, for example, a colloidal suspension. For example, commercially available carrier liquids are known in the art. The carrier liquid and/or other solvents can be employed at a sufficient concentration to provide the desired consistency for extrusion, which may vary depending on such things as the type of extruder, piston or auger used, and the extrusion form, such as tube, monolith, and so forth. One of ordinary skill in the art would readily be able to determine the amount of carrier liquid to be employed.

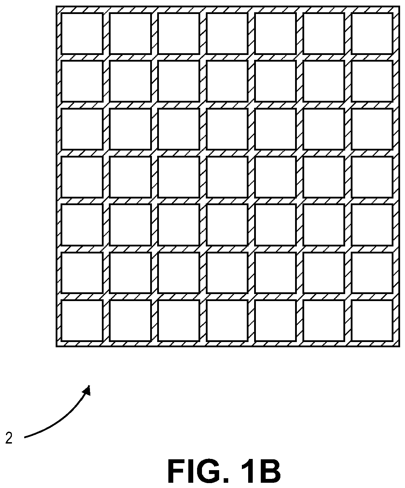

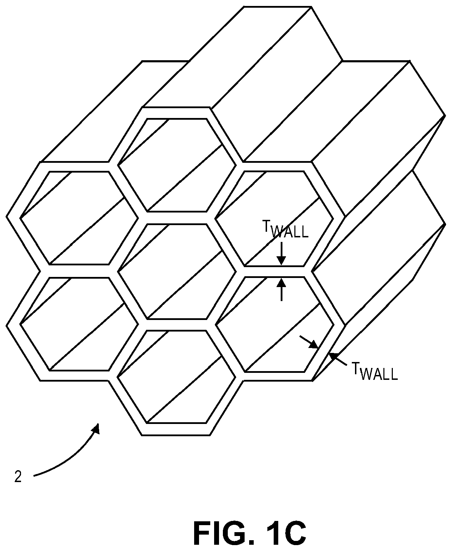

Any suitable extrusion process can be used to form the composite materials of the present disclosure. For example, the wet composite material can be pushed or drawn through an extruder that includes a die of the desired cross-section. Suitable extrusion techniques are known in the art. The extrusion process can produce an object having the same or substantially the same cross-section along an entire dimension (e.g., length or width). This is illustrated in FIG. 1, where the honeycomb monolithic ceramic structure 2 of FIG. 1A has the same or substantially the same cross section along an entire length, *L*, where the cross section is shown at FIG. 1B.

After extrusion, the resulting greenware can be heated to form the ceramic in any desired manner. For example, heating can comprise drying the extruded composite material at a first temperature and then sintering the extruded composite material at a second temperature that is higher than the first temperature. Any suitable drying and sintering temperatures can be used. Examples of drying temperatures include temperatures ranging from about 20°C to about 90°C. Examples of sintering temperatures include temperatures ranging from about 300°C to about 700°C. Drying and sintering are generally carried out separately, although simultaneous drying and sintering processes can be used. Suitable drying and sintering techniques are well known in the art.

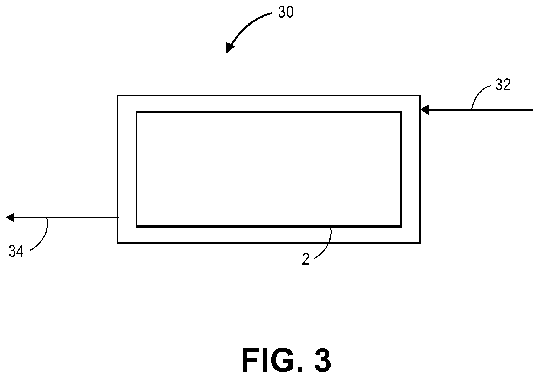

The ceramic structures of the present disclosure can be used in a variety of applications. One example of such an application is a gas capture system 30, such as shown in FIG. 3. System 30 comprises a gas inlet 32 and a gas outlet 34. The system also includes a monolithic ceramic extruded structure, such as the honeycomb structures 2, described herein. A gas entering the system through inlet 32 is forced through the monolithic ceramic extruded structure. The chemically active, high surface area of the monolithic ceramic extruded structure acts to capture CO₂ or other target chemical compounds, thereby removing the target chemical compounds from the gas stream. The gas stream with reduced target chemical compound concentrations then exits the system through gas outlet 34. In this manner, the system 30 can be used for removing CO₂ or other gas target chemical compounds from a gas stream.

### Examples

### Example 1

Carbon fibers and/or NEXTEL™ 312 ceramic fibers, available from 3M, having a diameter of 1-20 microns were ground to decrease the length of the original fibers to form particles having reduced aspect ratios of about 10 or smaller. The reduced aspect ratio particles were combined with a matrix material. The matrix material included a ceramic mixture that optionally comprised one or more binders. A 13X zeolite powder was combined with the ceramic mixture to form a dry mixture. To the dry mixture were added water and METHOCEL™, available from Dow of Midland, Michigan. The percentages of ingredients in the matrix material included about 35% ceramic mixture, about 25% 13X zeolite powder, about 3.25% METHOCEL™, and the remainder water, where the percentages of matrix ingredients are based on the total weight of the pre-sintered matrix material without the weight of the fibers. The fibers were mixed with the dry matrix materials, followed by addition of the METHOCEL™ and water.

The clay mixture was extruded into a greenware form having a cell density of 81 cells per square inch ("CPSI"). The greenware was dried under high humidity, such as about 70% to about 90% humidity, for over 48 hours and sintered at a temperature of 400°C for 4 hours.

### Example 2 - Crush Strength Testing

The crush strength was measured by extruding rods of similar matrix compositions to that of Example 1, where some rods included silicon carbide fibers, some rods included ceramic fibers (NEXTEL™ 312) and some rods had no fibers. After firing, the samples were crushed by compression testing with an Instron Dual test unit.

Baseline material (no fibers) had a crush strength of 132 psi. The addition of 14 wt% ground NEXTEL™ 312 fibers to the baseline material caused a strength increase of about 12% (148 psi). The addition of 3 wt% ground silicon carbide fibers to the baseline material resulted in about a 19% increase (157 psi). The weight percent of fibers is based on the total dry weight of the composite ingredients prior to sintering.

### Example 3 - Heat Transfer Testing

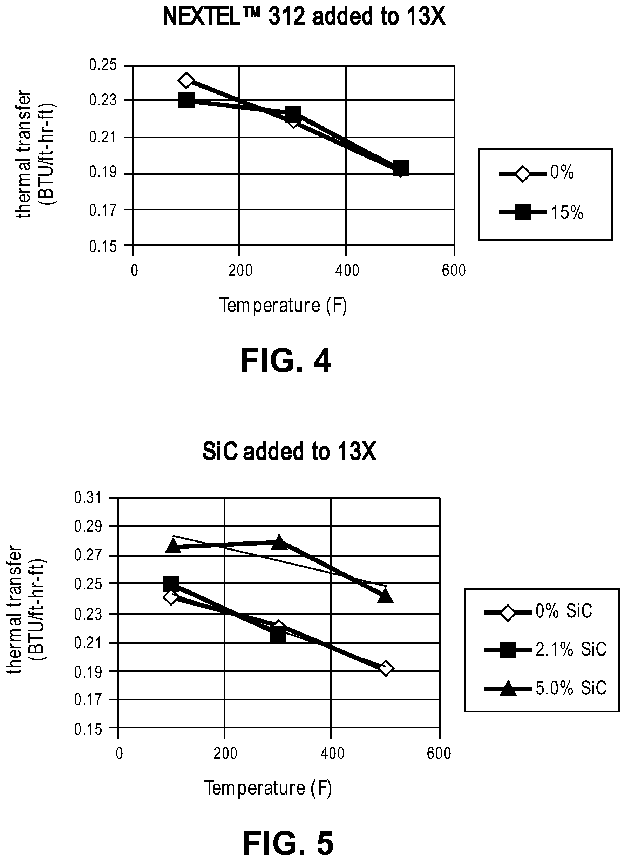

Heat transfer was measured on 2" disks formulated to have the matrix material of Example 1 with 0, 2.1% and 5% SiC, or 0 and 15% NEXTEL™ 312 fibers. Thermal transfer was measured at 100°F, 300 °F and 500°F. While the NEXTEL™ 312 added strength, it did not increase the heat transfer, as shown in FIG. 4. The 2.1 wt% SiC did not increase thermal properties. However, the 5 wt% SiC demonstrated an increase in thermal transfer as the temperature increased, as shown in FIG. 5. The weight percent of fibers for the data as presented in FIGS. 4 and 5 is based on the total dry weight of the composite ingredients prior to sintering.

### Example 4

Carbon fibers and/or NEXTEL™ 312 ceramic fibers having a diameter of 1-20 microns are ground to decrease the length of the original fibers to form reduced aspect ratio particles. 20 wt.% boehmite, 0.3 wt.% polyvinyl alcohol, 7 wt.% METHOCEL™ and 76.7 wt% of 13X zeolite powder are mixed to form a dry mixture, where the percentages are based on the total dry weight of the ingredients employed in the matrix. The carbon and/or NEXTEL™ 312 reduced aspect ratio fibers are combined and mixed with the dry mixture. To the resulting mixture is added water in an amount that produces a clay mixture suitable for extrusion.

The clay mixture is extruded into a greenware form having a cell density of 81 cells per square inch ("CPSI"). The greenware is dried under high humidity of about 80% for over 48 hours and sintered at a temperature of 400°C for 4 hours.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein.

Furthermore, to the extent that the terms "including," "includes," "having," "has," "with," or variants thereof are used in either the detailed description and the claims, such terms are intended to be inclusive in a manner similar to the term "comprising." Further, in the discussion and claims herein, the term "about" indicates that the value listed may be somewhat altered, as long as the alteration does not result in nonconformance of the process or structure to the intended purpose described herein. Finally, "exemplary" indicates the description is used as an example, rather than implying that it is an ideal.

## Claims

1. An extrudable composite, comprising:
a pre-sintered ceramic matrix material comprising:
from 20 to 80 % by weight of the ceramic matrix material of at least one powdered zeolite, and
a second powdered material comprising inorganic oxide, where the second powdered material is not a zeolite;
a plurality of particles having an aspect ratio ranging from about 2 to about 100, the plurality of particles comprising at least one particle type chosen from:
structurally reinforcing particles comprising at least one material chosen from inorganic oxides, inorganic carbides, inorganic borides, inorganic nitrides, inorganic silicides, ceramics or metals, and
thermal conductivity modifying particles comprising at least one material chosen from silicon, silicon carbide, carbon or a metal; and
a carrier liquid.

2. The composite of claim 1, wherein the at least one particle is included in an amount that will result in a sintered ceramic composition with a particle concentration ranging from about 0.2% to about 30% by weight relative to the total dry weight of the ingredients.

3. The composite of claim 1 or claim 2 in extruded form, wherein the extruded composite has an extruded shape comprising a cross section, the cross section being substantially the same along an entire dimension of the extruded shape.

4. The composite of claim 3, wherein the extruded shape is a monolithic honeycomb structure comprising a plurality of cell walls, each cell wall having a thickness of 0.254 mm (10 mil) or less, preferably wherein the monolithic honeycomb structure has at least one of an increased strength under load or an increased thermal conductivity compared to the same monolithic honeycomb structure without the plurality of particles.

5. The composite of claims 3 or 4, wherein the extruded shape is a monolithic honeycomb structure comprising a plurality of cells.

6. The composite of any of claims 3-5, wherein the at least one particle is in an amount ranging from about 0.5% to about 40% by weight relative to the total weight of the composition after sintering.

7. The composite of any of claims 3-6, wherein the at least one particle is in a form of a powder, a uniform fiber, a chopped fiber, a milled fiber, or combinations thereof.

8. The composite of any of claims 3-7, wherein the at least one particle has at least one dimension of 100 microns or less.

9. The composite of any one of claims 3-8, wherein a thermal conductivity modifying particle is employed, the thermal conductivity is increased by at least 10% compared to the same monolithic honeycomb structure without the plurality of thermal conductivity particles.

10. A method of making a ceramic composite, the method comprising:
mixing one or more pre-sintered ceramic matrix materials, a plurality of particles and a carrier liquid to form an extrudable composite material, wherein:
the one or more pre-sintered ceramic material comprises from 20 to 80 % by weight of at least one powdered zeolite, and a second powdered material comprising inorganic oxide, where the second powdered material is not a zeolite;
the plurality of particles have an aspect ratio ranging from about 2 to about 100,
the plurality of particles comprise at least one particle type chosen from structurally reinforcing particles and thermal conductivity modifying particles, the structurally reinforcing particles comprising at least one material chosen from inorganic oxides, inorganic carbides, inorganic borides, inorganic nitrides, inorganic silicides, ceramics or metals, and the thermal conductivity modifying particles comprising at least one material chosen from silicon, silicon carbide, carbon or a metal;
extruding the composite material into an extruded shape; and
heating the extruded composite material to form a ceramic composite.

## Patentansprüche

1. Extrudierbares Verbundmaterial, umfassend:
ein vorgesintertes keramisches Matrixmaterial, umfassend:
- 20 bis 80 Gew.-% des keramischen Matrixmaterials aus mindestens einem pulverförmigen Zeolith und
- ein zweites pulverförmiges Material, umfassend anorganisches Oxid, wobei das zweite pulverförmige Material kein Zeolith ist;
eine Vielzahl von Partikeln mit einem Seitenverhältnis im Bereich von etwa 2 bis etwa 100, wobei die Vielzahl von Partikeln mindestens einen Partikeltyp umfasst, der ausgewählt ist aus:
- strukturell verstärkenden Partikeln, umfassend mindestens ein Material, ausgewählt aus anorganischen Oxiden, anorganischen Carbiden, anorganischen Boriden, anorganischen Nitriden, anorganischen Siliciden, Keramiken oder Metallen, und
- Wärmeleitfähigkeit modifizierenden Partikeln, umfassend mindestens ein Material, ausgewählt aus Silizium, Siliziumkarbid, Kohlenstoff oder einem Metall; und
eine Trägerflüssigkeit.

2. Verbundmaterial nach Anspruch 1, bei dem das mindestens eine Partikel in einer Menge enthalten ist, die zu einer gesinterten keramischen Zusammensetzung mit einer Partikelkonzentration im Bereich von etwa 0,2 bis etwa 30 Gew.-%, bezogen auf das Gesamttrockengewicht der Bestandteile, führt.

3. Verbundmaterial nach Anspruch 1 oder Anspruch 2 in extrudierter Form, wobei das extrudierte Verbundmaterial eine extrudierte Form aufweist, die einen Querschnitt umfasst, wobei der Querschnitt entlang einer gesamten Abmessung der extrudierten Form im Wesentlichen der gleiche ist.

4. Verbundmaterial nach Anspruch 3, bei dem die extrudierte Form eine monolithische Wabenstruktur ist, die eine Vielzahl von Zellwänden umfasst, wobei jede Zellwand eine Dicke von 0,254 mm (10 mil) oder weniger aufweist, vorzugsweise wobei die monolithische Wabenstruktur im Vergleich zu derselben monolithischen Wabenstruktur ohne die Vielzahl von Teilchen eine erhöhte Festigkeit unter Last oder eine erhöhte Wärmeleitfähigkeit aufweist.

5. Verbundmaterial nach den Ansprüchen 3 oder 4, bei dem die extrudierte Form eine monolithische Wabenstruktur ist, die eine Vielzahl von Zellen umfasst.

6. Verbundmaterial nach einem der Ansprüche 3-5, bei dem das mindestens eine Partikel in einer Menge im Bereich von etwa 0,5 bis etwa 40 Gew.-%, bezogen auf das Gesamtgewicht der Zusammensetzung nach dem Sintern, vorliegt.

7. Verbundmaterial nach einem der Ansprüche 3-6, bei dem das mindestens eine Partikel in Form eines Pulvers, einer einheitlichen Faser, einer gehäckselten Faser, einer Kurzfaser oder einer Kombination derselben vorliegt.

8. Verbundmaterial nach einem der Ansprüche 3-7, bei dem das mindestens eine Partikel mindestens eine Abmessung von 100 Mikron oder weniger aufweist.

9. Verbundmaterial nach einem der Ansprüche 3-8, bei dem ein die Wärmeleitfähigkeit modifizierendes Partikel verwendet wird und die Wärmeleitfähigkeit gegenüber der gleichen monolithischen Wabenstruktur ohne die Vielzahl der Wärmeleitfähigkeitspartikel um mindestens 10% erhöht ist.

10. Verfahren zur Herstellung eines keramischen Verbundmaterials, wobei das Verfahren umfasst:
Mischen eines oder mehrerer vorgesinterter keramischer Matrixmaterialien, einer Vielzahl von Partikeln und einer Trägerflüssigkeit, um ein extrudierbares Verbundmaterial zu bilden, wobei:
das eine oder die mehreren vorgesinterten keramischen Materialien 20 bis 80 Gew.-% mindestens eines pulverförmigen Zeoliths und ein zweites pulverförmiges Material umfassen, das anorganisches Oxid umfasst, wobei das zweite pulverförmige Material kein Zeolith ist;
die Vielzahl von Partikeln ein Seitenverhältnis im Bereich von etwa 2 bis etwa 100 aufweist,
die Vielzahl von Partikeln mindestens einen Partikeltyp umfasst, der ausgewählt ist aus strukturell verstärkenden Partikeln und wärmeleitungsmodifizierenden Partikeln, wobei die strukturell verstärkenden Partikel mindestens ein Material umfassen, das ausgewählt ist aus anorganischen Oxiden, anorganischen Carbiden, anorganischen Boriden, anorganischen Nitriden, anorganischen Siliciden, Keramiken oder Metallen, und die wärmeleitungsmodifizierenden Partikel mindestens ein Material umfassen, das ausgewählt ist aus Silizium, Siliziumcarbid, Kohlenstoff oder einem Metall;
Extrudieren des Verbundmaterials in eine extrudierte Form; und
Erhitzen des extrudierten Verbundmaterials, um einen keramischen Verbund zu bilden.

## Revendications

1. Composite extrudable comprenant :
un matériau de matrice céramique pré-frittée comprenant :
de 20 à 80 % en poids du matériau de matrice céramique d'au moins une zéolithe en poudre, et
un second matériau en poudre comprenant un oxyde inorganique, le second matériau en poudre n'étant pas une zéolite ;
une pluralité de particules ayant un rapport de forme allant d'environ 2 à environ 100, la pluralité de particules comprenant au moins un type de particules choisi parmi :
des particules structurellement renforçantes comprenant au moins un matériau choisi parmi des oxydes inorganiques, des carbures inorganiques, de borures inorganiques, des nitrures inorganiques, des siliciures inorganiques, des céramiques ou des métaux, et
des particules modificatrices de conductivité thermique comprenant au moins un matériau choisi parmi le silicium, le carbure de silicium, le carbone ou un métal ; et
un liquide porteur.

2. Composite selon la revendication 1, dans lequel la au moins une particule est incluse en une quantité qui donnera une composition de céramique frittée avec une concentration en particules dans la plage d'environ 0,2 % à environ 30 % en poids par rapport au poids sec total des ingrédients.

3. Composite selon la revendication 1 ou la revendication 2 sous forme extrudée, dans lequel le composite extrudé a une forme extrudée comprenant une section transversale, la section transversale étant sensiblement la même sur toute la dimension de la forme extrudée.

4. Composite selon la revendication 3, dans lequel la forme extrudée est une structure monolithique en nid d'abeilles comprenant une pluralité de parois de cellule, chaque paroi de cellule ayant une épaisseur de 0,254 mm (10 mil) ou moins, de préférence dans lequel la structure monolithique en nid d'abeilles présente au moins une résistance accrue sous une charge ou une conductivité thermique accrue par comparaison à la même structure monolithique en nid d'abeilles sans la pluralité de particules.

5. Composite selon la revendication 3 ou 4, dans lequel la forme extrudée est une structure monolithique en nid d'abeilles comprenant une pluralité de cellules.

6. Composite selon l'une quelconque des revendications 3 à 5, dans lequel la au moins une particule est en une quantité dans la plage d'environ 0,5 % à environ 40 % en poids par rapport au poids total de la composition après frittage.

7. Composite selon l'une quelconque des revendications 3 à 6, dans lequel la au moins une particule est sous la forme d'une poudre, d'une fibre uniforme, d'une fibre dopée, d'une fibre broyée, ou de combinaisons de celles-ci.

8. Composite selon l'une quelconque des revendications 3 à 7, dans lequel la au moins une particule a au moins une dimension de 100 microns ou moins.

9. Composite selon l'une quelconque des revendications 3 à 8, dans lequel une particule modifiant la conductivité thermique est utilisée, la conductivité thermique est augmentée d'au moins 10 % par rapport à la même structure monolithique en nid d'abeilles sans la pluralité de particules de conductivité thermique.

10. Procédé de fabrication d'un composite de céramique, le procédé comprenant les étapes consistant à :
mélanger un ou plusieurs matériaux de matrice céramique pré-frittée, une pluralité de particules et un liquide porteur pour former un matériau composite extrudable, dans lequel
les un ou plusieurs matériaux de céramique pré-frittée comprenant de 20 à 80 % en poids d'au moins une zéolite en poudre, et un second matériau en poudre comprenant un oxyde inorganique, le second matériau en poudre n'étant pas une zéolite ;
la pluralité de particules ont un rapport de forme allant d'environ 2 à environ 100,
la pluralité de particules comprend au moins un type de particules choisi parmi des particules structurellement renforçantes et des particules de modification de conductivité thermique, les particules structurellement renforçantes comprenant au moins un matériau choisi parmi des oxydes inorganiques, des carbures inorganiques, des borures inorganiques, des nitrures inorganiques, des siliciures inorganiques, des céramiques ou des métaux, et les particules de modification de conductivité thermique comprenant au moins un matériau choisi parmi le silicium, le carbure de silicium, le carbone ou un métal ;
extruder le matériau composite en une forme extrudée ; et
chauffer le matériau composite extrudé pour former un composite céramique.
